(19) Europäisches Patentamt
European Patent Office
Office européen des brevets

(11) **EP 1 693 969 B1**

(12) **FASCICULE DE BREVET EUROPEEN**

(45) Date de publication et mention de la délivrance du brevet:
**15.04.2009 Bulletin 2009/16**

(51) Int Cl.:
**H04B 1/707** *(2006.01)*

(21) Numéro de dépôt: **06004668.7**

(22) Date de dépôt: **09.09.1999**

(54) **Procédé de réception de signaux AMRC à suppression parallèle d'interférences, étage et récepteur correspondants**

CDMA-Empfangsverfahren mit paralleler Interferenzunterdrückung, entsprechende Stufe und Empfänger

CDMA signal reception method with parallel interference suppression and its corresponding stage and receiver

(84) Etats contractants désignés:
**DE GB IT**

(30) Priorité: **11.09.1998 FR 9811335**

(43) Date de publication de la demande:
**23.08.2006 Bulletin 2006/34**

(62) Numéro(s) de document de la (des) demande(s) initiale(s) en application de l'article 76 CBE:
**99402221.8 / 0 986 189**

(73) Titulaire: **Commissariat à l'Energie Atomique 75015 Paris (FR)**

(72) Inventeurs:
  • **Boulanger, Christophe**
    **94200 Ivry Sur Seine (FR)**
  • **Ouvry, Laurent**
    **38000 Grenoble (FR)**
  • **Piaget, Bernard**
    **38610 Venon (FR)**
  • **Fort, Charles**
    **38470 Vatilieu (FR)**

(74) Mandataire: **Viering, Jentschura & Partner Postfach 22 14 43 80504 München (DE)**

(56) Documents cités:
**DE-C- 19 630 391      US-A- 5 644 592**

## Description

### Domaine technique

La présente invention a pour objet un procédé de réception de signaux AMRC à suppression parallèle d'interférences, un étage et un récepteur correspondants.

Elle trouve une application notamment en radiocommunications avec des mobiles.

### Etat de la technique antérieure

La technique d'étalement de spectre par séquence directe consiste, schématiquement, à multiplier un symbole d'information (par exemple un élément binaire) par une séquence pseudo-aléatoire (appelée aussi code) composée d'une séquence d'éléments appelés "chips". Cette opération a pour effet d'étaler le spectre du signal. En réception, le signal reçu est traité par corrélation (ou filtrage adapté) avec une séquence pseudo-aléatoire identique à celle de l'émission, ce qui a pour effet de réduire (ou désétaler) le spectre. Le signal ainsi désétalé est traité pour retrouver le symbole d'information.

Cette technique permet à plusieurs utilisateurs d'accéder à un même système de radiocommunications, à condition toutefois qu'ils utilisent des codes distincts. On parle alors d'accès multiple à répartition par les codes, ou AMRC en abrégé (CDMA en anglais pour "Code Division Multiple Access").

Bien qu'offrant de nombreux avantages, les communications par étalement de spectre à accès multiple par répartition par les codes sont de capacité limitée en terme de nombre d'utilisateurs. Cette limitation est due à des interférences se produisant entre signaux provenant d'utilisateurs différents. Plus les utilisateurs sont nombreux, plus ce phénomène perturbateur prend de l'importance.

Diverses solutions ont été proposées pour remédier à cet inconvénient et, notamment, la suppression (ou tout au moins la réduction) des interférences. Ainsi, dans le brevet américain US-A-5,218,619, par exemple, on préconise une suppression séquentielle des interférences en procédant par ordre décroissant de puissance des signaux des divers utilisateurs. Dans le brevet américain US-A-5,363,403 et US-A-5,644,592, on préconise au contraire une suppression parallèle de ces interférences. Comme la présente invention relève de cette dernière technique, on peut s'y arrêter en illustrant la structure générale d'un récepteur de ce type.

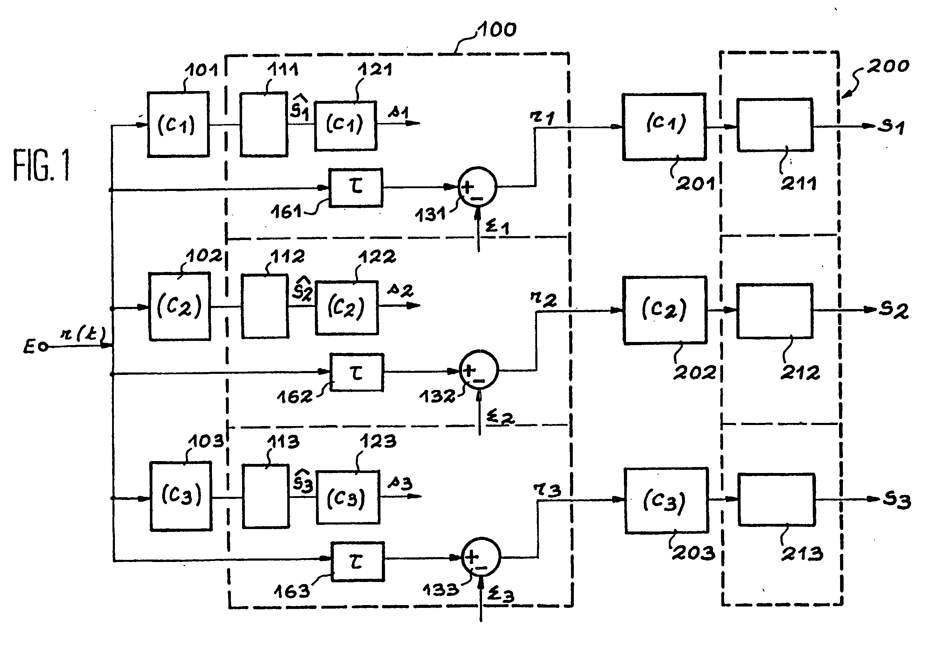

Le récepteur illustré sur la figure 1 annexée comprend une entrée générale E recevant un signal composite r (t) formé d'une pluralité de signaux correspondant à différents symboles d'information $S_1$, $S_2$, $S_3$. qui ont été étalés par une pluralité de codes pseudo-aléatoires $C_1$, $C_2$, $C_3$. Le récepteur représenté est supposé travailler avec trois codes, mais dans la pratique, évidemment, ce nombre est plus élevé.

Le récepteur représenté comprend d'abord un étage d'entrée avec des moyens 101, 102, 103 aptes à recevoir le signal composite et à délivrer un signal désétalé par le code $C_1$, $C_2$ ou $C_3$ propre à chaque voie ; ces moyens peuvent être constitués par un corrélateur ou par un filtre adapté.

Le récepteur comprend ensuite un étage 100 de suppression parallèle d'interférences qui comprend :

- des moyens 111, 112, 113 recevant le signal désétalé et délivrant une estimation $\hat{S}_1$, $\hat{S}_2$ ou $\hat{S}_3$ du symbole d'information correspondant ; ces moyens peuvent comprendre un intégrateur et un circuit de décision ;
- des moyens 121, 122, 123 aptes à ré-étaler le symbole estimé $\hat{S}_1$, $\hat{S}_2$ ou $\hat{S}_1$, $\hat{S}_3$, à l'aide du code $C_1$, $C_2$, $C_3$ propre à la voie, pour délivrer des signaux ré-étalés si, $S_2$ ou $S_3$,
- des moyens 131, 132, 133 pour soustraire du signal appliqué à l'entrée de la voie (après un retard convenable produit par un circuit à retard 161, 162, 163), la somme $\Sigma_1$, $\Sigma_2$, $\Sigma_3$ des signaux ré-étalés issus des autres voies ; en d'autres termes, le signal $\Sigma_1$ Et est formé par la somme $s_2+s_3$, le signal $\Sigma_2$ par $s_1+s_3$ et le signal $\Sigma_3$ par $s_1+s_2$. Les moyens 131, 132, 133 délivrent, dans chaque voie, un nouveau signal $r_1$, $r_2$, $r_3$ qui est débarrassé, en partie au moins, des interférences d'accès multiple correspondant aux autres voies.

Après l'étage de suppression parallèle d'interférences, on trouve trois filtres adaptés 201, 202, 203 travaillant respectivement avec les codes $C_1$, $C_2$, $C_3$ et désétalant les signaux $r_1$, $r_2$, $r_3$, puis un étage de sortie 200 avec trois circuits de décision 211, 212, 213 délivrant les trois données $S_1$, $S_2$, $S_3$.

Bien que donnant satisfaction à certains égards, de tels récepteurs n'éliminent pas les risques d'erreur. La suppression des interférences peut même, si elle est conduite sans précautions, augmenter ce risque. La présente invention a justement pour but de le réduire (autrement dit de diminuer le taux d'erreur de bits) en améliorant les moyens de reconstruction des signaux avant la suppression proprement dite des interférences. Avec l'invention, un seul étage de suppression parallèle d'interférences présente de meilleures performances que deux étages de suppression classiques.

Pour obtenir ce résultat, l'invention prévoit d'utiliser, dans l'étage de suppression d'interférences et pour estimer

**EP 1 693 969 B1**

les données reçues, un critère particulier qui est le critère dit de maximum de vraisemblance (en anglais "Maximum Likelihood"). Ce critère est en soi connu dans la technique AMRC. On pourra en trouver une description, par exemple, dans l'ouvrage de J.G. PROAKIS, intitulé "Digital Communications" McGRAW-HILL, Inc., 3ème édition,, 1995, Chapitre 5-1-4. Mais, dans l'art antérieur, ce critère est utilisé dans un récepteur ordinaire, et non dans un moyen de suppression parallèle d'interférences d'accès multiple. Par ailleurs, dans l'art antérieur, ce critère est mis en oeuvre à l'aide d'un algorithme dit de Viterbi, qui permet, à travers un treillis représentant toutes les configurations possibles, de trouver une séquence de données qui minimise une quantité dite "métrique de distance euclidienne". Cette technique, qui prend en compte l'ensemble de toutes les données transmises par tous les utilisateurs, est souvent très complexe. La présente invention adapte cette technique, notamment en la simplifiant. Elle définit, par ailleurs, une métrique particulière adaptée à la suppression parallèle des interférences d'accès multiple.

**Exposé de l'invention**

De façon précise, la présente invention est décrite dans les revendications indépendantes. Les revendications dépendantes décrivent les exemples de réalisation avantageux de l'invention.

**Brève description des dessins**

- la figure 1, déjà décrite, montre un récepteur classique à suppression parallèle d'interférences d'accès multiple ;
- la figure 2 montre un étage à suppression parallèle d'interférences avec, selon l'invention, des moyens fondés sur un critère de maximum de vraisemblance ;
- la figure 3 montre un récepteur conforme à l'invention avec trois étages de suppression d'interférences conformes à l'invention ;
- la figure 4 montre des exemples d'évolution de métriques en fonction des hypothèses sur les signes ;
- la figure 5 illustre une variante où la fiabilité de l'estimation est testée et où seules les données peu fiables sont prises en compte dans le calcul des métriques ;
- la figure 6 illustre une autre variante où les sorties des filtres adaptés sont reliées à l'étage de sortie par des moyens de pondération ;
- la figure 7 illustre encore une autre variante où les sorties des filtres adaptés sont pondérées selon des seuils de fiabilité ;
- la figure 8 montre une réponse impulsionnelle ayant servi à l'estimation des performances d'un récepteur conforme à l'invention :
- la figure 9 montre les variations du taux d'erreur de bits en fonction du rapport signal sur bruit pour une première réponse impulsionnelle de canal impliquant un seul trajet ;
- la figure 10 montre les variations du taux d'erreur de bits en fonction du rapport signal sur bruit pour la réponse impulsionnelle de la figure 8.

**Description de modes particuliers de réalisation**

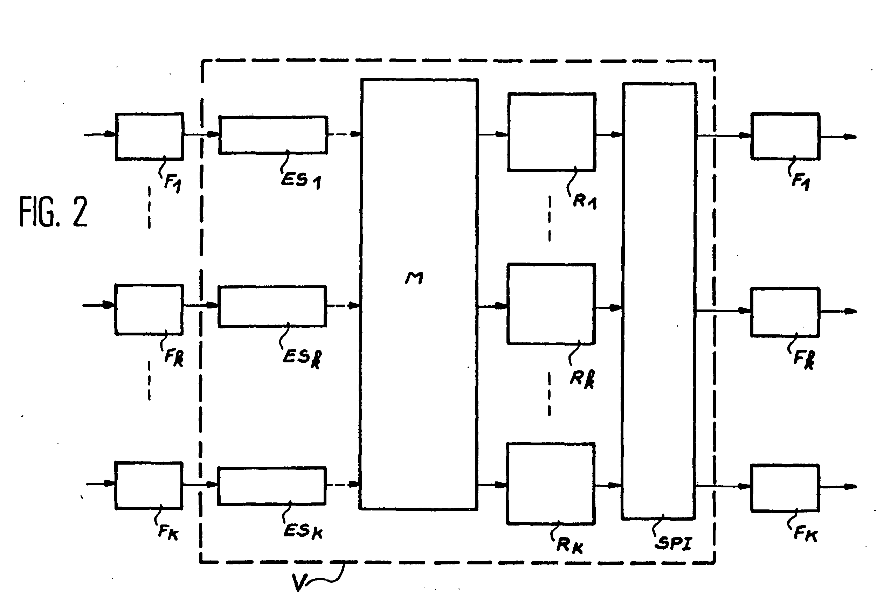

La figure 2 représente un étage de suppression parallèle d'interférences conforme à l'invention. Cet étage porte la référence générale V. Il est précédé de K filtres adaptés (ou corrélateurs) $F_1, ..., F_k, ..., F_K$. Le nombre K désigne le nombre de voies, donc le nombre maximum d'utilisateurs, l'indice k étant un indice courant compris entre 1 et K.

Le circuit V comprend K moyens $ES_1, ..., ES_k, ..., ES_K$ d'estimation du signal transmis lesquels estiment l'amplitude et le retard de chaque pic délivré par le filtre adapté qui précède. Le circuit comprend ensuite des moyens M pour calculer des métriques (dont on donnera l'expression précise plus loin), pour déterminer la métrique la plus faible et pour délivrer la configuration de signal correspondante, qui est alors la plus vraisemblable. Le circuit comprend encore K moyens $R_1, ..., R_k, ..., R_K$ pour reconstruire les signaux, c'est-à-dire pour délivrer des signaux étalés en fréquence par les codes pseudo-aléatoires. Ces signaux reconstruits sont alors appliqués à un circuit SPI de suppression parallèle d'interférences, dont la structure n'est pas représentée mais qui comprend, comme représenté sur la figure 1, des soustracteurs, des lignes à retard, etc...

L'étage V est suivi de filtres adaptés $F_1, ... , F_k, ..., F_K$ qui permettent soit d'attaquer un nouvel étage de suppression parallèle d'interférences, soit un étage de sortie.

Pour illustrer le fonctionnement du moyen M de calcul des métriques, on va considérer le cas simple d'un étage à deux voies (donc à deux utilisateurs). On suppose également qu'il existe plusieurs étages de suppression parallèle d'interférences, chacun étant repéré par un indice i, ces étages suivant un étage d'entrée auquel est attribué l'indice o. Dans l'étage d'indice i, les deux moyens d'estimation de l'amplitude du signal transmis délivrent donc deux signaux

3

notés $Z_i(1)$ pour la première voie et $Z_i(2)$ pour la seconde, alors que les deux filtres adaptés de l'étage d'entrée délivrent des signaux $Z_o(1)$ et $Z_o(2)$.

Le circuit M considère la valeur absolue des amplitudes de ces signaux, soit $|Z_i(1)|$ et $|Z_i(2)|$ et formule deux hypothèses sur le signe que l'on peut affecter à ces grandeurs, à savoir + ou -. Il y a donc $2^2=4$ hypothèses pour les groupes de deux signaux pris avec leur signe, ces quatre hypothèses (notées (Hyp)j). étant repérées par un indice j allant de 1 à 4. Les quatre configurations correspondant à ces quatre hypothèses sont les suivantes :

$$(\text{Hyp})_1 = \begin{pmatrix} +|Z_i(1)| \\ +|Z_i(2)| \end{pmatrix} \qquad (\text{Hyp})_2 = \begin{pmatrix} +|Z_i(1)| \\ -|Z_i(2)| \end{pmatrix}$$

$$(\text{Hyp})_3 = \begin{pmatrix} -|Z_i(1)| \\ +|Z_i(2)| \end{pmatrix} \qquad (\text{Hyp})_4 = \begin{pmatrix} -|Z_i(1)| \\ -|Z_i(1)| \end{pmatrix}$$

Selon une notation classique, chaque groupe de deux signaux peut être considéré comme les deux composantes d'un vecteur noté $(\vec{Z_i})$. On est donc en présence de quatre vecteurs possibles selon l'hypothèse retenue, soit :

$$\left(\vec{z_i}\right)_1, \quad \left(\vec{z_i}\right)_2, \quad \left(\vec{z_i}\right)_3, \quad \left(\vec{z_i}\right)_4$$

L'invention met en oeuvre une métrique de distance euclidienne, ci-après dénommée "métrique", de la forme $\Sigma(\vec{X}-\vec{Y})^2$ où $\vec{X}$ et $\vec{Y}$ représentent deux vecteurs. Une telle métrique mesure, en quelque sorte, la distance entre les deux points extrémités des vecteurs. Plus la métrique est faible, plus les vecteurs sont proches.

On va donc calculer les quatre métriques suivantes, correspondant aux quatre hypothèses formulées :

$$M_1 = (|Z_o(1)| - |Z_i(1)|)^2 + (|Z_o(2)| - |Z_i(2)|)^2$$
$$M_2 = (|Z_o(1)| - |Z_i(1)|)^2 + (|Z_o(2)| + |Z_i(2)|)^2$$
$$M_3 = (|Z_o(1)| + |Z_i(1)|)^2 + (|Z_o(2)| - |Z_i(2)|)^2$$
$$M_4 = (|Z_o(1)| + |Z_i(1)|)^2 + (|Z_o(2)| + |Z_i(2)|)^2$$

La plus faible de ces métriques correspond à la configuration la plus proche de la configuration en sortie de l'étage d'entrée, donc à la configuration la plus vraisemblable. Si, par exemple, la plus faible métrique est la troisième, $M_3$, la configuration la plus vraisemblable sera :

$$\vec{z_i} = \begin{pmatrix} -|Z_i(1)| \\ +|Z_i(2)| \end{pmatrix}$$

Le moyen M délivrera alors les signaux $-|Z_i(1)|$ et $+|Z_i(2)|$ et les deux circuits de reconstitution qui suivent étaleront ces signaux à l'aide des deux séquences pseudo-aléatoires appropriées. Les moyens classiques de suppression parallèle d'interférences recevront donc les signaux étalés les plus vraisemblables et pourront alors corriger ces signaux de manière optimale.

D'une manière générale, les moyens M d'un étage de rang i calcule la quantité

$$\sum_{\mathbf{bloc}} \left( \vec{z}_o - (\vec{z}_i)_j \right)^2$$

où la sommation est étendue au moins aux valeurs constituant le bloc de données dans un intervalle de temps égal à N durées de symbole.

Avec N=1, on n'a que K composantes à traiter (cas dit "bloc monosymbole") et le nombre d'hypothèses à formuler est de $2^K$. Avec NK composantes, ce nombre monte à $2^{NK}$. Pour éviter une trop grande complexité, on limite N à quelques unités, par exemple à moins de 5.

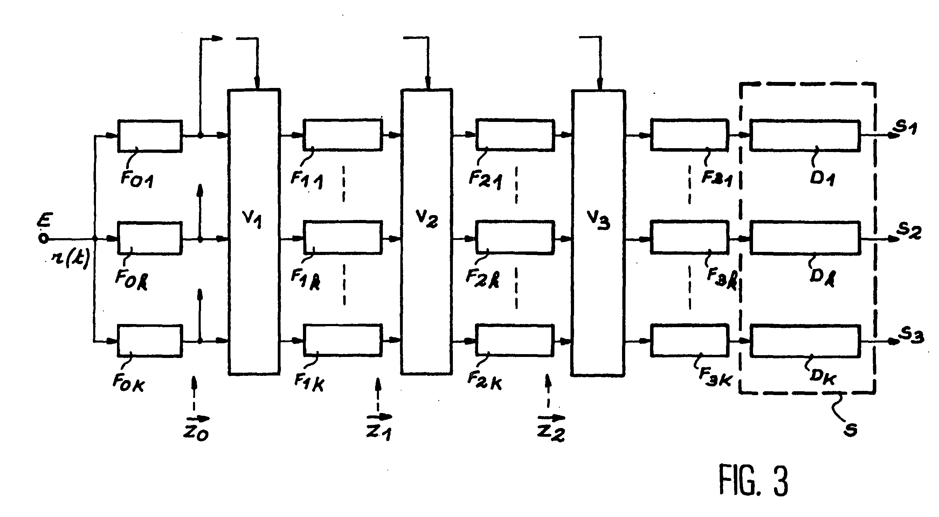

La figure 3 illustre un récepteur complet comprenant un étage d'entrée et un étage de sortie, comme pour la figure 1, avec trois étapes de suppression parallèle d'interférences référencés $V_1$, $V_2$, $V_3$ conformes à ce qui vient d'être décrit. Le récepteur comprend encore les filtres adaptés associés, $F_{11}$, ..., $F_{1k}$, ..., $F_{1K}$ pour le premier, $F_{21}$, ... , $F_{2k}$, ... , $F_{2K}$ pour le deuxième et $F_{31}$, ..., $F_{3k}$, ... , $F_{3K}$ pour le troisième.

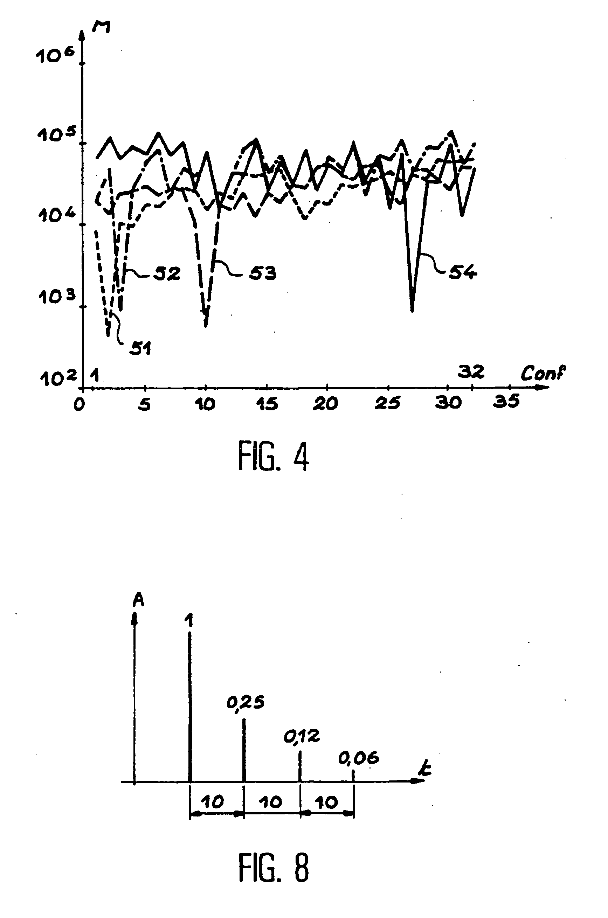

Pour illustrer les variations des valeurs prises par la métrique en fonction des hypothèses faites sur les signes, on considère le cas de trois utilisateurs utilisant chacun des séquences pseudo-aléatoires de 63 éléments ou "chips" chacune, la modulation employée étant de type différentiel à modulation quaternaire de phase (DQPSK) avec deux voies par utilisateur, à savoir une voie en phase (dite I) et une voie en quadrature de phase (dite Q). Il y a donc 6 voies en parallèle, soit $2^6$=32 hypothèses possibles sur les signes d'un bloc monosymbole. Ces 32 hypothèses ou configurations sont repérées par leur rang sur le diagramme de la figure 4, rang porté en abscisses, et les valeurs prises par la métrique sont portées en ordonnées. Quatre cas différents sont représentés correspondant aux quatre courbes 51, 52, 53 et 54. La valeur de la métrique est exprimée en éléments ou "chips". L'échelle est logarithmique. On voit bien que la métrique passe, pour une certaine configuration, par un minimum. Cette configuration est la plus vraisemblable. On constate également que les minima sont bien marqués, donc facilement exploitables.

Le procédé et le récepteur qui viennent d'être décrits supposent, en toute généralité, que $2^{NK}$ hypothèses sont formulées. On peut naturellement réduire la complexité du procédé en réduisant le bloc de signaux à K données (bloc monosymbole évoqué plus haut). Mais on peut réduire encore cette complexité en ne prenant en compte, dans le processus de recherche du maximum de vraisemblance, que les signaux pour lesquels l'estimation est jugée peu fiable, autrement dit, en excluant de ce processus les signaux jugés fiables. En supposant que Q signaux sont fiables, on ne retiendra donc que K-Q signaux pour le calcul des métriques, ce qui correspond à $2^{K-Q}$ hypothèses.

Des moyens de mesure de la fiabilité sont décrits et revendiqués dans la demande de brevet français n°98 09782 déposée le 30 juillet 1998 par le présent Demandeur.

Mais d'autre critères de fiabilité peuvent être utilisés, comme ceux qui sont décrits dans le brevet US-A-5,644,592.

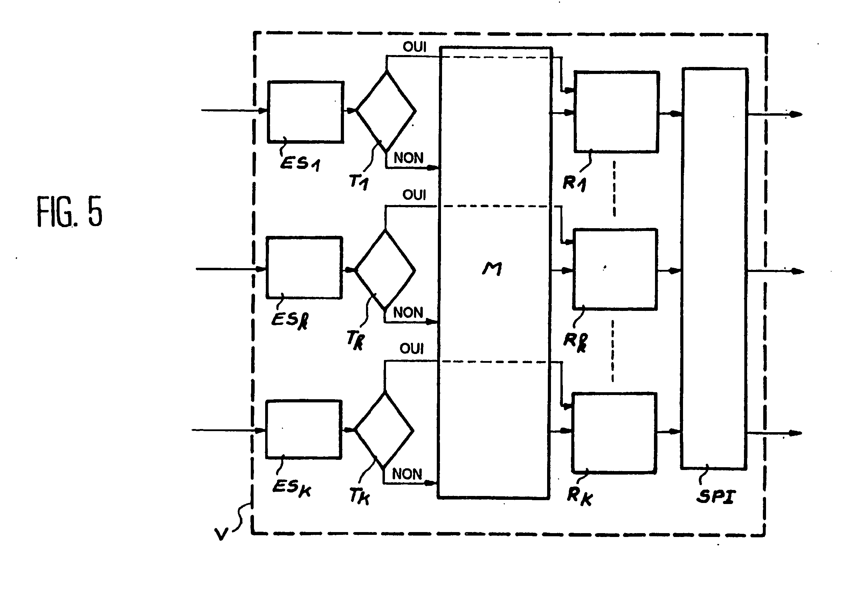

La figure 5 illustre un mode de réalisation d'un étage simplifié dans ce sens. Par rapport à l'étage de la figure 2, l'étage V' comprend des moyens de test de fiabilité $T_1$, ..., $T_k$, ..., $T_K$ qui reçoivent les signaux provenant des circuits d'estimation $ES_1$, ..., $ES_k$, ..., $ES_K$ et qui adressent ce signal soit au circuit M pour le calcul des métriques (branche marquée NON) soit aux circuits de reconstruction $R_1$, ..., $R_k$, ... , $R_K$ (branche marquée OUI).

Naturellement, plusieurs de ces étages simplifiés peuvent être mis en cascade, comme pour la figure 3.

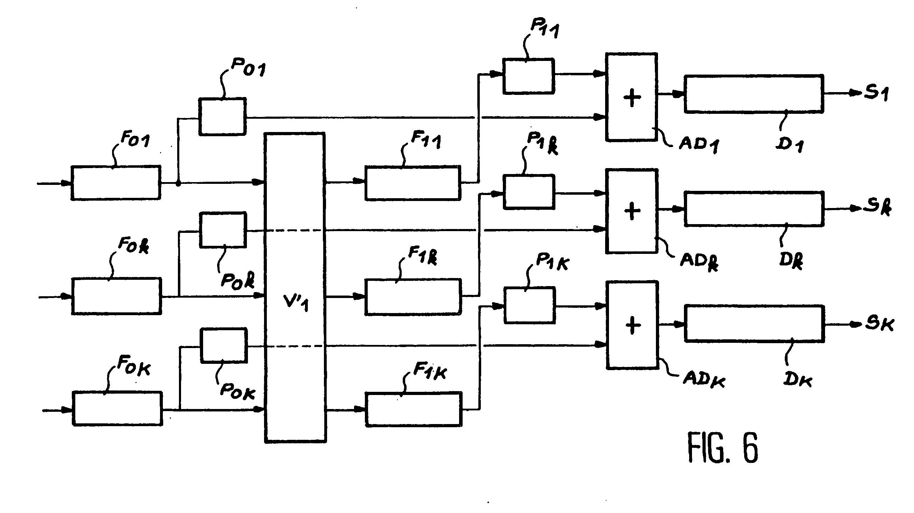

Dans un autre mode particulier de réalisation, les signaux délivrés par les filtres adaptés peuvent être combinés linéairement avant d'être adressés à l'étage de sortie. On voit ainsi, sur la figure 6, des premiers moyens de pondération $P_{o1}$, ... , $P_{ok}$, ..., $P_{oK}$ disposés en sortie des filtres adaptés $F_{o1}$, ... , $F_{ok}$, ... , $F_{oK}$ de l'étage d'entrée, des circuits de pondération $P_{11}$, ..., $P_{1k}$,..., $P_{1K}$ disposés en sortie des filtres adaptés placés derrière l'étage $V'_1$ de suppression parallèle d'interférences et des additionneurs $AD_1$, ..., $AD_k$, ..., $AD_K$ dont les entrées sont reliées aux circuits de pondération et la sortie aux circuits de décision $D_1$, ..., $D_k$, ... , $D_K$.

Les coefficients de pondération peuvent être fixes ou variables. Une telle technique est décrite, par exemple, dans US-A-5,553,062.

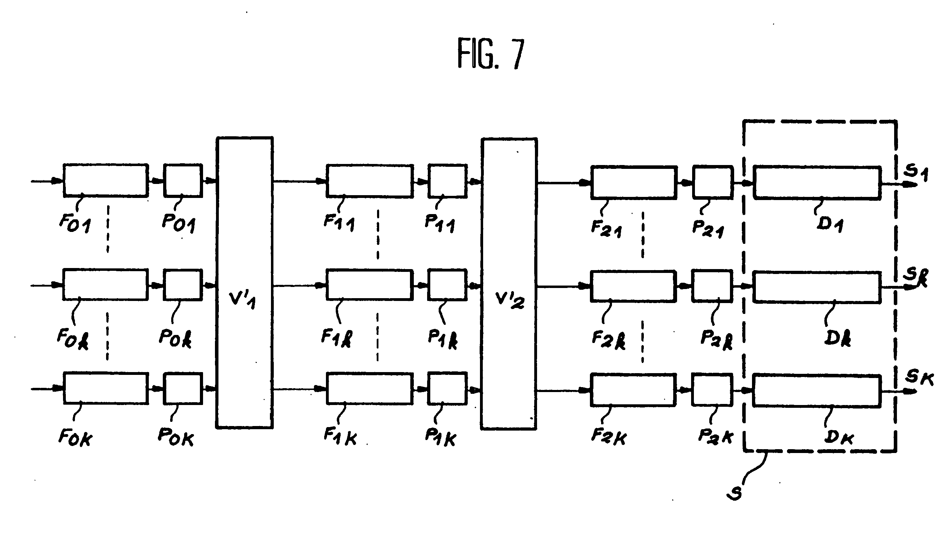

On peut aussi améliorer les reconstructions et les estimations des signaux en utilisant des seuils de fiabilité pour reconstruire ou ne pas reconstruire (ou ne reconstruire que partiellement) certains signaux. Une telle technique est décrite et revendiquée dans la demande de brevet français n°98 03586 déposée le 24 mars 1998 par le présent Demandeur. Une technique de ce genre est décrite également dans le brevet US-A-5,644,592. La figure 7 illustre ce mode particulier de réalisation dans le cas de deux étages de suppression parallèle d'interférences $V'_1$ et $V'_2$ simplifiés (c'est-à-dire conforme à la figure 5). On y voit des premiers circuits de pondération $P_{o1}$, ... , $P_{ok}$, ... , $P_{oK}$, des deuxièmes circuits de pondération $P_{11}$, ..., $P_{1k}$, ..., $P_{1K}$ et enfin des troisièmes circuits de pondération $P_{21}$, ..., $P_{2k}$, ..., $P_{2K}$.

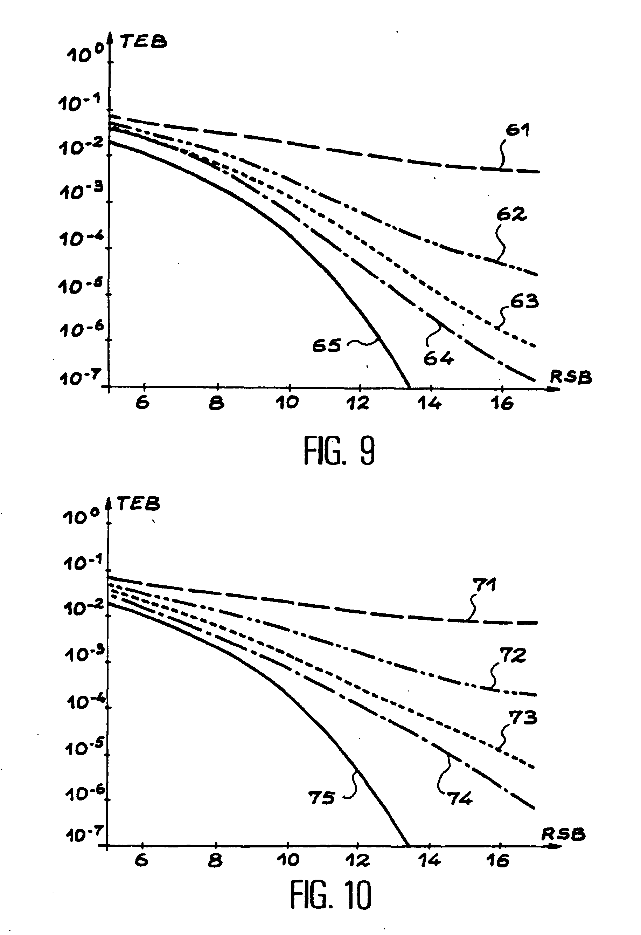

Les performances d'un récepteur selon l'invention ont été simulées par le Demandeur. Pour cela, certaines hypothèses ont été formulées quant à la réponse impulsionnelle du canal de propagation. On peut considérer d'abord une réponse impulsionnelle idéale qui serait formée par un unique pic, ce qui correspondrait à une absence de trajets multiples. Mais on peut choisir aussi une hypothèse plus réaliste, illustrée sur la figure 8, où l'on voit un premier pic d'amplitude 1 et trois pics d'amplitude égale respectivement à 0,25, 0,12 et à 0,06 représentant trois trajets secondaires. Les résultats de la simulation sont présentés sur les figures 9 et 10 pour ces deux hypothèses. Sur ces figures, le taux d'erreur de bits (TEB) est porté en ordonnées et le rapport signal sur bruit (RSB) en abscisses. Les références suivantes ont été utilisées pour les courbes :

- ◆ 61,71 correspondent à une structure classique ;
- ◆ 62,72 correspondent à une suppression parallèle d'interférences à un étage ;
- ◆ 63,73 correspondent à une suppression parallèle d'interférences à deux étages ;
- ◆ 64,74 correspondent à une suppression parallèle d'interférences selon l'invention (version simplifiée dans le cas de K=5 utilisateurs) ;
- ◆ 65,75 correspondent à une suppression parallèle d'interférences théorique pour un seul utilisateur en modulation DQPSK avec canal gaussien.

On voit que l'invention conduit à une amélioration sensible des performances. En particulier, un seul étage de suppression parallèle d'interférences (en version simplifiée) présente de meilleures performances que deux étages classiques.

**Revendications**

1.    Un procédé de suppression parallèle d'interférences pour des signaux AMRC, comprenant:

    une réception d'un signal composite comprenant une pluralité de signaux AMRC transmis correspondant à des signaux d'information qui ont été étalés en fréquence par une pluralité de séquences pseudo-aléatoires différentes dont le nombre correspond au nombre de signaux d'information;
    une corrélation de cette pluralité de signaux avec des séquences correspondantes par des filtrés adaptés ($F_1$, $F_k$) d'un étage d'entrée;
    une estimation des signaux d'information correspondants aux signaux AMRC transmis;
    un calcul d'une métrique de distance entre des hypothèses différentes sur les signes des signaux d'information estimés et des signaux délivrés par les filtres adaptés;
    une sélection d'une hypothèse sur les signes des signaux d'information estimés avec une probabilité maximale basée sur la plus petite métrique de distance calculée ;
    une reconstruction des signaux étalés en fréquence par les séquences pseudo-aléatoires de la pluralité des séquences pseudo-aléatoires, basée sur les signaux d'information correspondants à l'hypothèse sélectionnée; et
    une suppression parallèle d'interférences des signaux reconstruits.

2.    Le procédé selon la revendication 1, la suppression parallèle d'interférences comprenant, pour chaque signal des signaux reconstruits, une soustraction de la contribution des autres signaux

3.    Un système pour traiter des signaux AMRC, comprenant:

    un moyen pour recevoir un signal composite, le signal composite comprenant une pluralité de signaux AMRC transmis correspondants aux signaux d'information qui ont été étalés en fréquence par une pluralité de séquences pseudo-aléatoires différentes dont le nombre correspond au nombre de signaux d'information;
    un moyen ($F_1$, $F_k$) pour désétaler le signal composite ($F_1$, $F_k$);
    un moyen ($ES_1$, $ES_k$) pour estimer des signaux d'information correspondants aux signaux AMRC transmis; et
    un moyen (M) pour calculer une métrique de distance entre les hypothèses différentes sur les signes d'information estimés et des signaux délivrés par le moyen pour désétaler, et pour selectionner une hypothèse sur les signes probabilité maximale basée sur la plus petite métrique de distance calculée;
    un moyen ($R_1$, $R_k$) pour reconstruire la pluralité de signaux AMRC, basée sur les signaux correspondants à l'hypothèse sélectionée; et
    un moyen (SPI) pour supprimer des interférences sur la base des signaux AMRC reconstruits.

4.    Le système selon la revendication 3,
    le moyen pour recevoir le signal composite comprenant une partie d'entrée capable de recevoir le signal composite;
    le moyen pour désétaler le signal composite comprenant plusieurs filtres ($F_1$, $F_k$) capables de corrélation du signal composite par des séquences pseudo-aléatoires, les filtres étant encore et toujours aptes à sortir en output plusieurs signaux correlés;
le moyen pour supprimer des interférences comprenant plusieurs moyens pour suppression parallèle d'interférence; et
encore et toujours comprenant un circuit de sortie en output (S) comprenant plusieurs circuits de décision, aptes à sortir en output plusieurs signaux basés sur des signaux avec interférences supprimés delivrés par le moyen pour supprimer des interférences.

**5.** Le récepteur selon la revendication 4, encore et toujours comprenant un moyen pour pondérer ($P_{o1}$, $P_{ok}$) après chaque filtre, capable de pondérer le signal delivré par le filtre respectif.

**Claims**

**1.** Method of parallel suppression of interferences for CDMA signals, comprising:

receiving a composite signal comprising a plurality of transmitted CDMA signals
corresponding to information signals which have been spread in frequency by a plurality of different pseudo-random sequences, the number of which corresponds to the number of information signals,
correlating said plurality of signals with corresponding sequences by matched filters ($F_1$, $F_k$) of an input stage,
estimating the information signals corresponding to the transmitted COMA signals,
calculating a distance metric between different hypotheses on the signs of the estimated information signals and signals supplied by the matched filters,
selecting a hypothesis on the signs of the estimated information signals with a maximum likelihood based on the smallest calculated distance metric,
reconstructing the signals spread in frequency by the pseudo-random sequences of the plurality of the pseudo-random sequences on the basis of the information signals corresponding to the selected hypothesis, and
a parallel suppression of interferences of the reconstructed signals.

**2.** Method according to claim 1, wherein the parallel suppression of interferences comprises for each signal of the reconstructed signals a subtraction of the contribution of the other reconstructed signals.

**3.** System for processing CDMA signals, comprising:

a means for receiving a composite signal, said composite signal comprising a plurality of transmitted CDMA signals corresponding to the information signals that have been spread in frequency by a plurality of different pseudo-random sequences, the number of which corresponds to the number of information signals,
a means ($F_1$, $F_k$) for despreading the composite signal ($F_1$, $F_k$),
a means ($ES_1$, $ES_k$) for estimating information signals corresponding to the transmitted COMA signals, and
a means (M) for calculating a distance metric between different hypotheses on the estimated information signs and signals supplied by the means for despreading, and for selecting a hypothesis on the signs of the estimated information signals with a maximum likelihood on the basis of the smallest calculated distance metric,
a means ($R_1$, $R_k$) for reconstructing the plurality of COMA signals on the basis of the signals corresponding to the selected hypothesis, and
a means (SPI) for suppressing interferences on the basis of the reconstructed CDMA signals.

**4.** System according to claim 3, wherein
the means for receiving the composite signal comprises an input portion capable of receiving the composite signal,
the means for despreading the composite signal comprises several filters ($F_1$, $F_k$) capable of correlating the composite signal by pseudo-random sequences, said filters being further suitable for outputting several correlated signals,
the means for suppressing interferences comprises several means for parallel interference suppression, and
further comprising an output circuit (S) comprising several decision circuits suitable for outputting several signals on the basis of signals with suppressed interferences supplied by the means for suppressing interferences.

**5.** Receiver according to claim 4, further comprising a weighting means ($P_{o1}$, $P_{ok}$) after each filter, capable of weighting the signal supplied by the respective filter.

**Patentansprüche**

1. Verfahren zur parallelen Interferenzunterdrückung für CDMA-Signale, aufweisend:

   Empfangen eines Verbundsignals, das eine Mehrzahl von übertragenen CDMA-Signalen aufweist, die Informationssignalen entsprechen, die durch eine Mehrzahl von verschiedenen Pseudozufallssequenzen frequenzgespreizt wurden, deren Anzahl der Anzahl von Informationssignalen entspricht,
   Korrelieren der Mehrzahl von Signalen mit entsprechenden Sequenzen durch Anpassungsfilter ($F_1$, $F_k$) einer Eingangsstufe,
   Schätzen der Informationssignale, die den übertragenen CDMA-Signalen entsprechen,
   Berechnen einer Abstandsmetrik zwischen verschiedenen Hypothesen über die Vorzeichen der geschätzten Informationssignale und Signalen, die von den Anpassungsfiltern ausgegeben werden,
   Auswählen einer Hypothese über die Vorzeichen der geschätzten Informationssignale mit einer maximalen Wahrscheinlichkeit auf der Grundlage der kleinsten berechneten Abstandsmetrik,
   Wiederherstellen der durch die Pseudozufallssequenzen der Mehrzahl der Pseudozufallssequenzen frequenzgespreizten Signale auf der Grundlage der Informationssignale, die der ausgewählten Hypothese entsprechen, und
   eine parallele Interferenzunterdrückung der wiederhergestellten Signale.

2. Verfahren gemäß Anspruch 1, wobei die parallele Interferenzunterdrückung für jedes Signal der wiederhergestellten Signale eine Subtraktion des Beitrags der anderen wiederhergestellten Signale aufweist.

3. System zum Verarbeiten von CDMA-Signalen, aufweisend:

   ein Mittel zum Empfangen eines verbundsignals, wobei das Verbundsignal eine Mehrzahl von übertragenen CDMA-Signalen aufweist, die den Informationssignalen entsprechen, die durch eine Mehrzahl verschiedener Pseudozufallssequenzen frequenzgespreizt wurden, deren Anzahl der Anzahl von Informationssignalen entspricht,
   ein Mittel ($F_1$, $F_k$) zum Entspreizen des Verbundsignals ($F_1$, $F_k$),
   ein Mittel ($ES_1$, $ES_k$) zum Schätzen von Informationssignalen, die den übertragenen CDMA-Signalen entsprechen, und
   ein Mittel (M) zum Berechnen einer Abstandsmetrik zwischen verschiedenen Hypothesen über die geschätzten Informations-Vorzeichen und Signale, die von dem Mittel zum Entspreizen ausgegeben wurden, und zum Auswählen einer Hypothese über die Vorzeichen der geschätzten Informationssignale mit einer maximalen Wahrscheinlichkeit auf der Grundlage der kleinsten berechneten Abstandsmetrik,
   ein Mittel ($R_1$, $R_k$) zum Wiederherstellen der Mehrzahl von CDMA-Signalen auf der Grundlage der Signale, die der ausgewählten Hypothese entsprechen, und
   ein Mittel (SPI) zum unterdrücken von Interferenzen auf der Grundlage der wiederhergestellten CDMA-Signale.

4. System gemäß Anspruch 3, wobei das Mittel zum Empfangen des Verbundsignals einen Eingangsabschnitt aufweist, der zum Empfangen des Verbundsignals geeignet ist,
   wobei das Mittel zum Entspreizen des Verbundsignals mehrere Filter ($F_1$, $F_k$) aufweist, die zum Korrelieren des Verbundsignals durch Pseudozufallssequenzen geeignet sind, wobei die Filter des Weiteren zum Ausgeben mehrerer korrelierter Signale geeignet sind,
   wobei das Mittel zum unterdrücken von Interferenzen mehrere Mittel zur parallelen Interferenzunterdrückung aufweist,
   und
   weiterhin einen Ausgangsschaltkreis (S) aufweisend, der mehrere Entscheidungsschaltkreise aufweist, die zum Ausgeben von mehreren Signalen auf der Grundlage von Signalen mit unterdrückten Interferenzen geeignet sind, die von dem Mittel zum Unterdrücken der Interferenzen ausgegeben werden.

5. Empfänger gemäß Anspruch 4, ferner nach jedem Filter ein Gewichtungsmittel ($P_{o1}$, $P_{ok}$) aufweisend, das zum Gewichten des durch das jeweilige Filter ausgegebenen Signals geeignet ist.

FIG. 1

FIG. 2

FIG. 3

FIG. 4

FIG. 8

FIG. 5

EP 1 693 969 B1

FIG. 6

FIG. 7

FIG. 9

FIG. 10

## RÉFÉRENCES CITÉES DANS LA DESCRIPTION

**Documents brevets cités dans la description**

- US 5218619 A
- US 5363403 A
- US 5644592 A
- FR 9809782
- US 5553062 A
- FR 9803586

**Littérature non-brevet citée dans la description**

- **J.G. PROAKIS.** Digital Communications. Mc-GRAW-HILL, Inc, 1995